# EUROPEAN PATENT SPECIFICATION

(11) **EP 1 517 613 B1**
(45) Date of publication and mention of the grant of the patent: **20.08.2008**
(21) Application number: 03730773.3
(22) Date of filing: 02.06.2003
(51) Int. Cl.: A23C 11/10, A23C 20/02, A23L 1/20

(54) **METHOD OF MANUFACTURING RAW MATERIAL BEANS DRINKS AND SOLID FERMENTED FOOD**
VERFAHREN ZUR HERSTELLUNG VON GETRÄNKEN UND VON EINEM FESTEN FERMENTIERTEN NAHRUNGSMITTEL AUS BOHNEN ALS ROHSTOFF
PROCEDE DE FABRICATION DE BOISSONS ET D'UN PRODUIT ALIMENTAIRE SOLIDE FERMENTE A BASE DE FEVES

(30) Priority: 01.07.2002 JP 2002192212; 01.07.2002 JP 2002192221
(43) Date of publication of application: 30.03.2005
(73) Proprietor: Kagome Labio Co., Ltd., Nagoya-shi, Aichi 460-0002 (JP)
(72) Inventor: KATO, Ikuo KAGOME LABIO CO., LTD., Komaki-shi, Aichi 485-0059 (JP); YANO, Toshihiro c/o KAGOME LABIO CO., LTD., Komaki-shi, Aichi 485-0059 (JP); OGAWA, Hiroshi KAGOME LABIO CO., LTD., Komaki-shi, Aichi 485-0059 (JP); YAJIMA, Nobuhiro KAGOME LABIO CO., LTD., Komaki-shi, Aichi 485-0059 (JP)
(74) Representative: Vossius & Partner
(86) International application number: PCT/JP2003/006937
(87) International publication number: WO 2004/002231

(56) References cited:
- EP-A- 0 988 793
- EP-A- 1 031 284
- GB-A- 1 400 470
- GB-A- 2 016 255
- US-A- 4 119 733
- US-B1- 6 322 846
- PATENT ABSTRACTS OF JAPAN vol. 008, no. 172 (C-237), 9 August 1984 (1984-08-09) & JP 59 071641 A (TSUNE KAWAHARA), 23 April 1984 (1984-04-23)
- CHENG Y J ET AL: "SOGURT, A YOGURT-LIKE SOYBEAN PRODUCT: DEVELOPMENT AND PROPERTIES" JOURNAL OF FOOD SCIENCE, INSTITUTE OF FOOD TECHNOLOGISTS. CHICAGO, US, vol. 55, no. 4, July 1990 (1990-07), pages 1178-1179, XP000159987 ISSN: 0022-1147
- DATABASE WPI Section Ch, Week 198419 Derwent Publications Ltd., London, GB; Class D13, AN 1984-117383 XP002254583 & JP 59 055144 A (NAGANO KEN KORIDOFU), 30 March 1984 (1984-03-30)

## Description

The present invention relates to methods for manufacturing a novel drink from beans as a material and solid fermented food. Particularly, the present invention relates to a method for manufacturing a drink where whole grain-mash of the beans is used as a raw material of beans and solid fermented food.

The term "whole grain-mash of beans" referred to herein means a ground product which is a product made by the process in which the hull of a bean was removed. Various bacteria are usually attached to the hull, and these cause it to be rough when it was ground.

Hereinafter, although in the present specification, "soybean" will be exemplified as a bean and explained, the other beans, specifically, such as "red bean, kidney beans, green pea, cowpea, fava bean, peanut, green gram, mottled kidney bean, chickpea" and the like are also capable of being applied to methods for manufacturing a raw material beans drink and solid fermented food of the present invention.

Conventionally, many raw material beans drinks such as soybean milk, fermented soybean milk and the like are commercially available in the market (see Japanese Unexamined Patent Publication No.H05-184320, Japanese Unexamined Patent Publication No.H10-201415, Japanese Unexamined Patent Publication No.H10-210947, Japanese Unexamined Patent Publication No.2000-93083 gazettes and the like).

Moreover, not limiting to soybean milk, a drink made by utilizing whole grain-mash of beans which has been previously disclosed by the present applicant or the like has been also studied (see, Japanese Patent Application No.2001-361397 (Laid open: unpublished when it was filed)).

The above-described conventional raw material beans drinks had the problems as described in the following:

When an acidic material (sour taste material, acidic fruit juice, acidic milk and the like) are directly added to the stabilized suspensions or soybean milks prepared from whole grain-mash of beans (hereinafter, referred to as "primary raw material"), the denaturation of protein causes aggregation/association, separation, precipitation and the like to be generated, and then, if the sterilization by heating is performed as it is, it changes into a state of a bean curd. Hence, it has been difficult to use the raw materials (acidic material) whose pHs are in the acidic region on the fear that the deterioration of slippery-smooth feeling in the throat of drinks (feeling rough or the like) occurs.

Therefore, almost all of pHs (hydrogen ion index) of raw material beans drinks available in the market are in the neutral pH region where the stability of colloid is excellent. Although rawmaterial beans drinks into which acidic materials (acidic fruit juice and fermented lactic-drink) and the like were mixed are present in one portion of the products, pH adjustment of the final products by the addition of salts and the like and the selection of the stabilizer (glutinizer, viscosity thickening polysaccharides and the like) were required, and further, it was necessary to consider the timing of mixture of the raw materials, the blending ratio, and besides those, the conditions of sterilization (conditions of heating or the like) and the like, and it needed the complex manufacturing steps.

It should be noted that we have confirmed when an acidic material (sour taste material, acidic fruit juice, fermented lactic drink and the like) was directly added to a primary raw material for sterilization and mixed, for example, when the conditions of the sterilization were made so as to be at 90°C for 15 minutes, the separation occurs when pH of the solution after it was mixed was 5.0 or less, and the stability was significantly lowered.

Therefore, in the case where an acidic material is added, it was necessary to mix both solutions at a predetermined ratio while devising not to generate the local lowering of pH after the primary raw material and the acidic material were individually heated, sterilized and cooled. Specifically, in the prior art, it was difficult to mix these before the sterilization because the separation occurs when it is maintained and sterilized (i.e., heating treatment) after soybean milk (or stabilized suspension) and an acidic solution were mixed.

On the other hand, for a solid fermented product whose raw materials are beans, almost all of them were products of soybean milk which is a raw material of a bean curd. For example, there exist the following known publications (prior art):
1) Japanese Unexamined Patent Publication No. 05-184320, Japanese Unexamined Patent Publications No. 10-201415 and 10-201416, Japanese Unexamined Patent Publication No. 2001-120180 gazettes and the like:
   these are technologies concerning with methods for fermenting soybean milk for the purpose of improving the taste of soybean milk and technologies concerning with lactic bacteria or Lactobacillus bifidus used for fermentation.
2) Japanese Unexamined Patent Publication No. H08-66161 gazette and the like:
   these are technologies concerning with methods for manufacturing a solid fermented food made from the raw materials of beans which is fermented with lactic acid by adding rennet of animal origin to soybean milk.
3) Japanese Unexamined Patent Publication No.H06-62778 gazette:
   these are technologies concerning with methods for manufacturing a solid food from raw materials of beans in which sea grasses for food such as agar, algin (sodium alginate) and the like are added to soybean milk.

However, in such a way as the present invention, a technology in which after the denaturation of protein was performed by adding a coagulant or the like to soybean milk, and then, one to which homogenation treatment or dispersing was performed is fermented and utilized by adding a lactic acid starter has not been described in any known publication.

Naturally, a solid fermented food made from beans as a raw material to which the treatment similar to the above-described ones was performed by utilizing whole grain-mash of beans stabilized suspension, too, does not exist.

The reason has been that in the case of a fermented product , if bean curd refuse component (mainly, fibrous material) remains, it is difficult to obtain a product which is felt pleasant to the palate and slippery smooth in the throat, the smell of beans remains in the case of having been a fermented product and it causes a problem from the viewpoint of the taste of it.

However, as for bean curd refuse, it is the situation now that one portion of it is processed into food, but almost all of it is used for animal feed or it is abandoned from the reason of its taste or the like, although it includes a large amount of other mineral components as well as dietary fibers.

EP-A-0 988 793 relates to a process for producing lactic acid-fermented soybean milk which comprises adding a soybean protein coagulating agent to starting soybean milk, heating the starting soybean milk containing the coagulating agent at 70°C to 150°C for 1 second to 10 minutes, homogenizing the heated soybean milk and then subjecting the homogenized soybean milk to lactic acid fermentation. EP-A-1 031 284 relates to a method of producing a soymilk, comprising adding a coagulant to a raw soymilk, homogenizing, treating with direct high-temperature flash heating using steam, and then homogenizing the mixture. JP-A-59/071641 discloses a certain preparation of yogurt of soybean milk.

An object of the present invention is to provide a method for manufacturing a drink made from beans as a raw material having an excellent taste, a slippery smooth feeling in the throat and being pleasant to the palate even in an acidic pH region by a simpler number of manufacturing steps in consideration of the above-described problems. Moreover, another object of the present invention is to provide a novel method for manufacturing a solid fermented food which is smooth in the texture and excellent in the taste.

In the course that the present inventors have made an earnest effort to study and develop in order to solve the above-described problems, the present inventors have achieved a method for manufacturing a drink having a very slippery smooth feeling in the throat which is made from beans as a raw material such as soybean milk, whole grain-mash of a bean or the like.

One embodiment of the present invention is a method for manufacturing a drink made from beans as a raw material, characterized in that it comprises the steps of:
preparing a stabilized suspension by treating an aqueous slurry of whole grain-mash of beans once or a plurality of times using a homogenizer under a homogenized pressure of 100 Kgf/cm² (9.8 MPa) or more,
performing the denaturation of protein for denaturing the protein by adding a coagulant and/or a pH adjustor to the stabilized suspension, and
performing the dispersing treatment for making the relevant protein denaturation raw material dispersed by a physical dispersing means.

Another embodiment of the present invention is a method for manufacturing a solid fermented food made from beans as a raw material, characterized in that it comprises the steps of:
preparing a stabilized suspension by treating an aqueous slurry of whole grain-mash of beans once or a plurality of times using a homogenizer under a homogenized pressure of 100 Kgf/cm² (9.8 MPa) or more,
performing the denaturation of protein for denaturing the protein by adding a coagulant and/or a pH adjustor to the relevant stabilized suspension,
performing the dispersing treatment for making the relevant protein denaturation raw material dispersed by a physical treatment means after the step of denaturing the protein was performed, and
fermenting for fermenting / solidifying it by adding a lactic bacterium starter after the step of dispersing treatment was performed, and it is manufactured via the step of maturating if it is necessary.

A drink made from a bean as a raw material having a slippery smooth feeling in the throat is obtained by denaturing (coagulating) the protein of a stabilized suspension of beans or protein of soybean milk, and further, by treating a homogenization. Moreover, it is suitable as a method for manufacturing a drink containing an acidic material.

Moreover, the present inventors have found that in the case where a lactic bacterium starter was added to it and it was fermented / solidified, a solid fermented food made from a bean as a raw material having a very smooth texture and being pleasant to the palate is obtained. Herein, the term "solidification" is referred to a concept including a gel body having a dispersion liquid phase like a pudding, a jelly and an agar as well as a cheese-like product substantially not having the dispersing liquid phase.

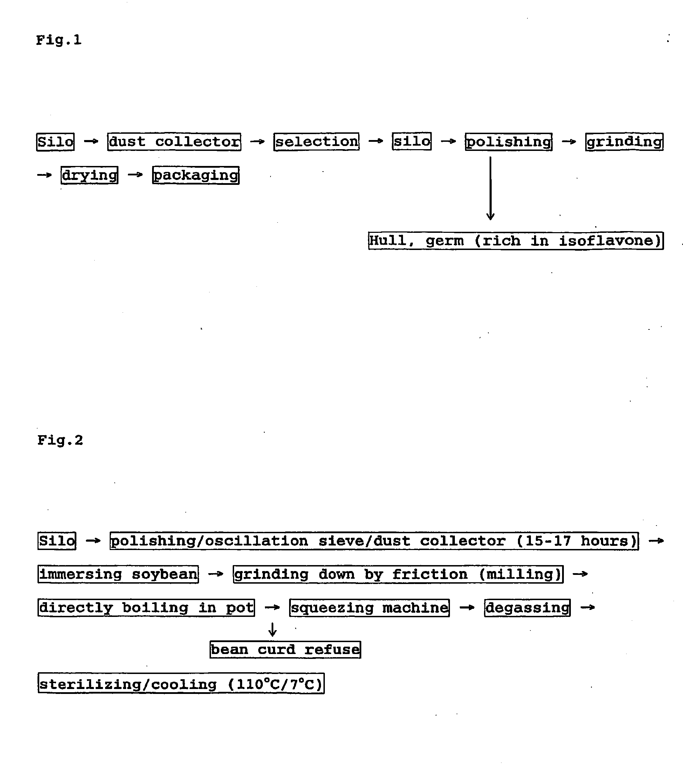

By utilizing whole grain-mash of a bean, the steps of "→ boiling in a pot → squeezing" as described in soybean manufacturing step (see Fig.2) are not required, the manufacturing of a fermented product in which useful components of beans (particularly, soybean) can be effectively utilized is capable of being realized. Specifically, there will be no fear that most of the useful components (nutrient components) are transferred to the bean curd refuse in the step of squeezing for obtaining the squeezed liquid (soybean milk).

In the above-described respective constitutions (drinks and solid fermented food), it is not essential, but it may be available that saccharides as well as a lactic bacterium starter are added to it for the purpose of adjusting the taste and the fermentation time.

In a method for manufacturing the above-described drink, after performing the fermentation step, and further, it is desirable to add a re-dispersing treatment step for making it re-dispersed by a physical dispersing means. By adding the re-dispersing treatment step, the feeling of slippery smoothness in the throat as well as the degree of stabilization can be enhanced.

Furthermore, it is desirable that a physical treatment in the above-described dispersing / re-dispersing treatment step is performed using a homogenizer under the pressure of a homogenizing pressure or less in the step of preparing a stabilized suspension, resulting in being capable of performing the respective steps using the same homogenizer and the productivity becoming excellent.

Moreover, it is desirable that in the above-described respective constitutions (drink and solid fermented food), one or more than two species of coagulant(s) and/or pH adjustor(s) are selected from the group of potassium chloride, magnesium chloride, calcium chloride and an acidic pH adjustor. Among these, magnesium and calcium are desirably added because there are minerals which are apt to be short in human body.
Fig.1 is a flow chart showing the step of manufacturing whole grain-mash of soybean;
Fig.2 is a flow chart showing the step of manufacturing soybean milk;
Fig.3 is a flow chart showing an example of a method for manufacturing a drink made from a bean as a raw material in the present invention;
Fig.4 is a flow chart showing another example of a method for manufacturing a drink made from a bean as a raw material in the present invention;
Fig.5 is a flow chart showing still another example of a method for manufacturing a drink made from a bean as a raw material in the present invention;
Fig. 6 is a flow chart showing a step of manufacturing a cheese like solid fermented food; and
Fig. 7 is a flow chart showing a step of manufacturing a solid fermented food in a gel.

Hereinafter, a concrete constitution of the present invention will be explained below. It should be noted that in the present specification, the symbol "%" indicating the blending ratio is made as a mass unit except that it is particularly mentioned.

A. One embodiment of the present invention is a method of manufacturing a drink made from beans as a raw material (raw material beans drink). More concretely,
it is characterized in that it comprises the steps of:
preparing a stabilized suspension by treating an aqueous slurry of whole grain-mash of beans once or a plurality of times (desirably, 2-4 times) using a homogenizer under a homogenizing pressure of 100 Kgf/cm² (9.8 MPa) or more, or desirably under a homogenizing pressure of 150 Kgf/cm² (14.7 MPa) or more,
performing the denaturation of protein for denaturing the protein by adding a coagulant and/or a pH adjustor to a stabilized suspension, and
performing the dispersing treatment for making the relevant protein denaturation raw material dispersed by a physical dispersing means.

A drink obtained by a method for manufacturing of the present invention is a product being pleasant to the palate and having a slippery smooth feeling in the throat and an excellent taste even in the case where whole grain-mash of a bean is used.

It should be noted that in the case where soybean milk is utilized, since bean curd refuse containing a large amount of mineral components or the like (components mainly consisting of fibrous material) is aggressively eliminated when soybean milk is made, however, if whole grain-mash of a bean is used, a large amount of mineral components can be contained in the drink, and the components of the bean can be effectively utilized.

Moreover, it is also possible to solve the disposal problem of bean curd refuse by utilizing whole grain-mash of beans.

A stabilized suspension can be prepared according to the following method described in Japanese Patent Application No.2001-361397 (Laid open: unpublished when it was filed).

First, the raw material soybean is ground and whole grain-mash of the bean is prepared (see Fig.1). In Fig.1, the germ as well as the hull is also removed, since the germ is rich in isoflavone, and only that is separated and made into the raw material of the nutrient supplement or the like, whereby commercial value (added value) is enhanced. From the viewpoint of being pleasant to the palate, only the removal of the hull may be required. It should be noted that about 59-59.8 kg of whole grain-mash of the bean could be obtained from 60 kg of the raw material soybean.

Moreover, as whole grain-mash of the bean, usually, the product whose average size is in the range of 10-50µm commercially available in the market can be used. For example, whole grain-mashes of the bean which are manufactured and sold under the trade names such as "gold", "Platinum", "Silver" commercially available from Toshoku, Co., Ltd., and the like are capable of being preferably applied.

As a method for preparing a stabilized suspension from the above-described whole grain-mash of the bean, first, the whole grain-mash of the bean is dissolved in water and made into a slurry (primary suspension).

At this time, it is desirable that the concentration of the whole grain-mash of the bean (drying standard) in the above-described slurry (primary suspension) is made in the range from 1 to 40%, desirably, in the range from 5 to 35%. If the concentration is too high, the emulsification due to the physical force using a homogenizer becomes difficult.

Here, the temperature of water may be ordinary temperature, however, in order to easily make it into slurry, the warm water at a temperature in the range from 40 to 80°C may be used (usually, carrying out the preheating (for example, in the range from 50 to 80°C)). If hot water whose temperature is too high is used, there is fear that the nutrient components are released.

For example, this slurrying can be performed by rotating the dissolution stirring wing at the rotation rate of 40-60 rpm using a tank for dissolving powder raw material used for usual drink.

Then, in the homogenizing treatment of the primary suspension, using a homogenizer, it is treated under the homogenizing pressure of 100 kgf/cm² (9.8 MPa) or more, desirably, 150 kgf/cm² (14.7 MPa) or more.

Herein, the term "homogenizer" refers to "a device for making a stable suspension by giving a strong mechanical action to the two-component system of solid-liquid, liquid-liquid such as coating, milk or the like" (from "New Edition Chemical Engineering Dictionary edited by Chemical Engineering Society, May, 1974, published by Maruzen). As a homogenizer, although so-called "high pressure type homogenizer" "which flows the liquid under a high pressure through the narrow gap and utilizes the strong shear action working at that time" and so-called "stirring type homogenizer (homomixer)" "which utilizes the shear action due to the impact and vortex flow by rotation wing at a high rate" and the like are representative ones, the other machines used as a homogenizer, for example, "centrifugal homogenizer (colloid milk)", "supersonic homogenizer (supersonic disposer)", "wet type oscillating ball mill", and further, a machine called "vacuum emulsification device" can be used. It should be noted that as a (high pressure type) homogenizer, "High pressure homogenizer-H120-AA1 type" made by Sanwa Machine, Co., Inc., and the like can be listed, and as a stirring type homogenizer, "Clea Mix Batch continuous system SLM-37S" made by M Technique, Co., Ltd., and the like can be listed.

The operational condition (homogenizing pressure) at this time is made as 100 kgf/cm² (9.8 MPa) ormore, desirably, 150 kgf/cm² (14.7 MPa) or more.

When the homogenizing pressure is too low, it is difficult to prepare the stabilized suspension. At this time, as for the treatment using a homogenizer, if the treatment is repeated a plurality of times (2-4 times) under the pressure of around 150 kgf/cm², the degree of stabilization (degree of homogenization) for the stabilized suspension is apt to easily increase.

We have found that usually, in the case of milk protein, if the treatment is repeated a plurality of times under the same homogenizing pressure, the degree of homogenization better than that cannot be obtained, however, in the case of protein of beans, the degree of homogenization is enhanced by repeating the treatment. Specifically, as a result, this is capable of easily obtaining a product having slippery smooth feeling in the throat and being pleasant to the palate, and a stabilized suspension having a high fermentative characteristic.

It should be noted that the homogenization treatment might be performed once by setting the homogenizing pressure, for example, at a pressure in the range from 300 kgf/cm² (29.4 MPa) to 600 kgf/cm² (58.9 MPa), which is apressure significantly exceeding 150 kgf/cm². however, in this case, it is necessary to use a special high pressure homogenizer, and there is fear that the texture of protein and the texture of the other nutrient components are destroyed.

Next, the protein is denatured by adding a coagulant and/or a pH adjustor (hereinafter, it may be simply referred to as "coagulant and the like") to the stabilized suspension of this whole grain-mash of the bean.

As a coagulant and the like, an anhydride or a hydrate such as a coagulant and the other acidic pH adjustor and the like utilized in the usual bean curd is capable of being appropriately used.

Concretely, as a coagulant, potassium chloride, calcium chloride, calcium sulfate, magnesium chloride (bittern), magnesium sulfate and the like can be listed.

Moreover, as a pH adjustor, glucono σ-lactone, adipic acid, citric acid, gluconic acid, succinic acid, tartaric acid, carbon dioxide, lactic acid, acetic acid, fumaric acid, malic acid, phosphoric acid and the like can be listed.

Particularly, in the present invention, it is desirable that one species or more than two species are selected from the group of potassium chloride, magnesium chloride, calcium chloride and an acidic pH adjustor, thereby easily denaturing the protein.

As a blending ratio of the above-described coagulant and/or pH adjustor, although it is different depending upon the raw material for use in it, usually, it is in the range from 0.005 to 5.00%, desirably, in the range from 0.01 to 3.00%, and further desirably, it is in the range from 0.02 to 1.00%.

It should be noted that when a coagulant and/or pH adjustor are added, it is not necessary that the above-described primary suspension might be coagulated into a bean curd (curd formation) . Moreover, the stabilizer, perfume and the like as well as a coagulant and/or a pH adjustor may be added. Furthermore, it is not essential, but saccharides may be added for the purpose of adjusting the fermentation time, taste and the like if it is necessary.

Then, as a physical dispersion means used in the step of performing the dispersing treatment, since it has been previously refined and a large amount of energy for dispersion is not required, various stirring, mixing, wet type grinding devices (including supersonic) are capable of being utilized. Usually, from the viewpoint of productivity, the homogenizer used in the step of performing the stabilization treatment is utilized. Naturally, the operational condition (homogenizing pressure) may be lower than the operational condition (homogenizing pressure) in the above-described step of preparing the stabilized suspension. Because the step of performing the dispersing treatment only aims at maintaining the liquid state which is required for a drink (securing an excellent slippery smooth feeling in the throat).

As the above-described explanation, a drink made from a bean as a raw material having a slipper smooth feeling in the throat can be obtained by further performing the dispersing treatment after the protein has been denatured by adding a coagulant and/or a pH adjustor to the stabilized suspension. Moreover, all of acidic materials (acidic milk, sour taste material, acidic fruit juice, and the like) may be added after adding the coagulant and/or pH adjustor, and these are capable of being subjected to the sterilization by heating in conjunction with the stabilized suspension.

Then, since in the case where pH of the drink made from the bean as a raw material which is the final product is 5.0 or less (furthermore, even in the case of being pH 4.2 or less), the separation does not occur, the effective design of steps not requiring the consideration of a method for mixing, a mixing timing and the like which have been conventionally required can be realized.

In the above-described constitution, it is not essential, but as the step following the step of performing the dispersing treatment, saccharides as well as a lactic bacterium starter may be added for the purpose of adjusting the fermentation time, the taste and the like if it is necessary.

At this time, as a lactic bacterium starter, it is not limited if its metabolic products and the like are not harmful to human body, but, for example, lactic bacteria starters such as Lactobacillus casei, Streptococcus thermophilus, lactobacillus Helveticus and the like which are utilized for lactic bacterium drink and fermented milk can be listed.

In the case where saccharides are added, a given saccharide can be selected frommonosaccharides, disaccharides and the like, but it is particularly desirable to select glucose (dextrose) or fructose (fruit sugar) since their effects are great. As for the addition amount of saccharides when saccharides are added, usually, it is made in the range from 0.50 to 20.0%, desirably, in the range from 3.0 to 15.0%, resulting in the adjustment effect of the taste and the fermentation time being excellent.

At this time, the fermentation condition may be made into a condition in accordance with the general manufacturing of lactic bacterium drink and fermented milk, and usually, it is made so as to be at 37-42°C for 4-80 hours.

A fermentation type drink having a slippery smooth feeling in the throat and an excellent taste whose fermentative characteristic is excellent when the lactic bacterium starter used for usual fermented products such as milks and the like can be obtained by adding saccharides and lactic bacterium starter, and by fermenting these if it is necessary as described above.

It should be noted that in the case where the step of fermenting it is added, after carrying out the step of fermenting it, and further, it is desirable that the step of performing the secondary dispersing treatment is added. It can be stabilized by adding the re-dispersing treatment, specifically, it can be made slippery smooth in the throat.

As a treatment condition in the step of performing the secondary dispersing treatment, it is made similar to the step of performing the dispersing treatment after the foregoing step of denaturing the protein. Specifically, the re-dispersing treatment is carried out for the purpose of maintaining the liquid state required for drink.

Furthermore in the step of production, sterilization, cooling, and adding of required agents are performed to make products.

It should be noted that although in the above-described explanation, the case where the step of preparing the stabilized suspension and the step of denaturing the protein are in turn carried out has been explained, all or one portion of the step of denaturing the protein may be carried out with the step of preparing the stabilized suspension at the same time. Specifically, in the step of preparing the stabilized suspension, the stabilized suspension maybe treated once or a plurality of times after the whole grain-mash of the bean and a coagulant and/or a pH adjustor were mixed together.

Up to this point, a method for manufacturing a raw material beans drink by making the stabilized suspension as a raw material prepared from whole grain-mash of the bean has been explained, but also described herein, but not forming part of the invention, is the following constitution by making the known soybean milk as a raw material instead of the stabilized suspension prepared from the whole grain-mash of the bean.

A method for manufacturing a drink made from beans as a raw material, comprising the steps of:
denaturing the protein by adding a coagulant and/or a pH adjustor to soybean milk, and
performing the dispersing treatment for treating the relevant protein denaturation raw material under a low pressure using a homogenizer.

The relevant constitution is a method for manufacturing suitable for an acidic material containing drink derived from soybean milk, as similar to a method for manufacturing it from the above-described stabilized suspension, all of the acidic material (acidic milk, sour taste material, acidic fruit juice and the like) may be mixed after the coagulant and/or pH adjustor were added, and it is capable of being subjected to the sterilization by heating in conjunction with soybean milk.

Here, as a soybean milk, one prepared by the known method comprising a general-purpose step shown in Fig. 2 and the others can be used. It should be noted that soybean milk is an opaque white liquid obtained by removing the fibrous material (bean curd refuse) after hot water and the like were added to soybean and ground down by friction (milled), and the other components such as protein and the like were extracted.

It should be noted that also in the case where soybean milk is made as a raw material, it is not essential, but as the step following the step of performing the dispersing treatment, it is capable of being constituted such that saccharides as well as a lactic bacterium starter are added for the purpose of adjusting the taste and the fermentation time. Then, further the step of performing the secondary dispersing treatment is also capable of being added after the step of fermentation.

Furthermore, it is desirable from the same reason as that described above that one or more than two species of coagulant (s) and/or pH adjustor(s) are selected from the group of magnesium chloride, calcium chloride and acidic pH adjustor, and then, the homogenizing pressure of a homogenizer in the step of performing the dispersing treatment is made 100 kgf/cm² (9.8 MPa) or more.

As described above, a raw material beans drink prepared by a method of manufacturing according to the present invention by making a stabilized suspension or soybean milk prepared from whole grain-mash of the beans as a raw material will be a drink having an excellent slippery smooth feeling in the throat in an acidic pH region as shown in an example described later.

B. Another embodiment of the present invention is a method for manufacturing a solid fermented food made from beans as a raw material, comprising the steps of:
preparing a stabilized suspension by treating an aqueous slurry of whole grain-mash of the beans once or a plurality of times under the homogenizing pressure of 100 kgf/cm² (9.8MPa), preferally 150 kgf/cm² (14.7 MPa), using a homogenizer,
denaturing the protein by adding a coagulant and/or a pH adjustor to the relevant stabilized suspension,
performing the dispersing treatment for dispersing by a physical treatment means after performing the step of denaturing the protein, and
adding a lactic bacterium starter and fermenting/solidifying it after performing the dispersing treatment,
and further, comprising the step of maturing it if it is necessary.

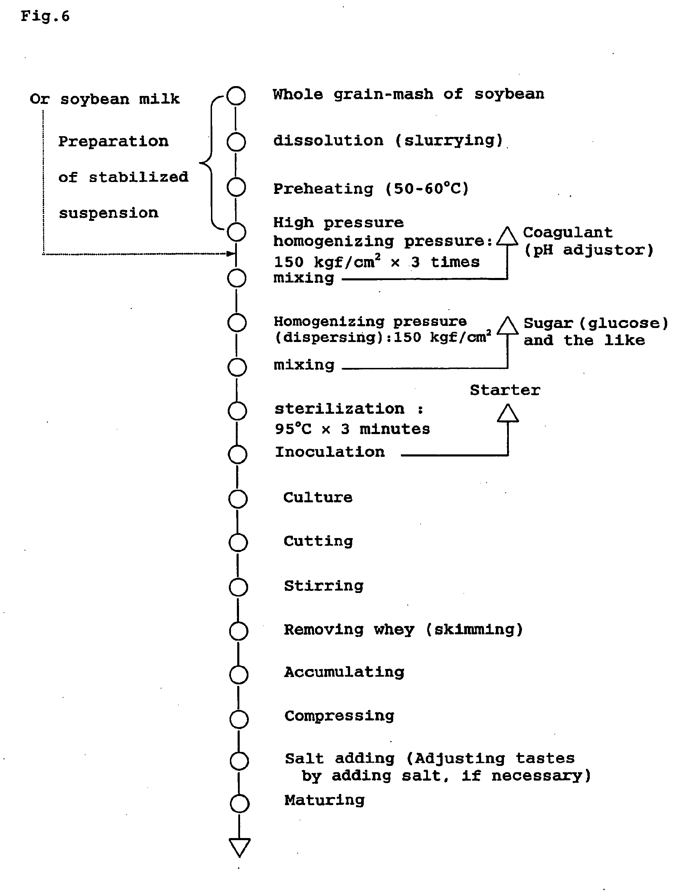

First, the case where a cheese like solid fermented food is manufactured using the relevant stabilized suspension after the stabilized suspension of whole grain-mash of the beans was prepared will be exemplified and explained (mainly, see Fig.6). It should be noted that as for the operational conditions for preparation of the stabilized suspension and dispersing treatment and the like, a method of manufacturing in accordance with the portion in the foregoing method for manufacturing the drink could be applied. Hence, here, the detailed explanation may be omitted.

In the step of denaturing the protein, the denaturation of the protein is in turn generated by adding a coagulant and the like, stirring and mixing. The stirring and mixing are performed by rotating the dissolution stirring wing at the rotation rate of 40-60 rpm using a tank for dissolving powder raw material used for usual drinks as similar to the case of the foregoing slurrying.

After performing the above-described step of performing dispersing treatment, the sterilization treatment is carried out after the sugar, perfume and the like for attaching the taste were appropriately mixed. The conditions of this sterilization treatment are made, for example, so as to be at 95°C for 3 minutes.

A lactic bacterium starter (starter for cheese or starter for lactic bacterium drink) is added to this dispersing treated matter after this sterilization treatment was carried out, and it is fermented. At this time, it is not essential, but the constitution in which saccharides are added if it is necessary may be made.

A whole grain-mash of beans fermented product having a slippery smooth feeling, excellent taste in spite of whole grain-mash of beans and fermentative characteristic being excellent when the lactic bacterium starter used for usual fermented products such as milks and the like is utilized can be prepared by adding saccharides if these are necessary. It should be noted that the addition of the saccharides are not necessarily done, these may be added in the prior stage.

Here, as a starter for cheese and starter for lactic bacterium drink, these are not particularly limited if their metabolic products are not harmful to human body. Usually, in order to obtain a cheese like solid fermented food, a starter for cheese is used.

At this time, as a starter for cheese, Lactococcus lactis, Streptococcus thermophilus, Lactobacillus delbrueckii, Lactobacillus helveticus and the like can be listed.

Moreover, as a starter for lactic bacterium drink, for example, Lactobacillus Helveticus, Lactobacillus casei and the like can be listed.

The addition amount of a lactic bacterium starter is usually made in the range from 0.4 to 1.5%.

In the case where saccharides are added, as saccharides, a given saccharide can be selected from monosaccharides, disaccharides and the like, however, glucose (dextrose) or lactose (milk sugar) is particularly desirable because the fermentation promotion effect due to the addition is great. The addition amount of glucose or lactose is usually made in the range from 0.5 to 15%, desirably in the range from 2 to 8%, and more desirably, in the range from 3 to 6%.

It should be noted that although in the preparation of the above-described cheese like food material, the case where the step of preparing the stabilized suspension and the step of denaturing the protein are in turn carried out has been explained, all or one portion of the step of denaturing the protein may be carried out with the step of preparing the stabilized suspension at the same time. Specifically, in the step of preparing the stabilized suspension, the stabilized suspension may be treated once or a plurality of times after the whole grain-mash of the bean and a coagulant and/or a pH adjustor were mixed together.

The material of a cheese like food (solid fermented food) thus prepared was cultured, and then, a cheese like solid fermented food is made via the steps similar to the usual method for manufacturing a cheese.

Here, the culture conditions (fermentation) are usually made so as to be at 30-42°C for 4-80 hours which are in accordance with the manufacturing of cheese.

After the culture treatment raw material was cut into a predetermined size (usually, size of soybean), gently stirred (at 1-30 rpm for 5-10 minutes), and the supernatant which has been run-off is removed until the curd layer (solid layer) is seen.

Then, after precipitation/compression were similarly carried out by a general-purpose compressor, the salt is added if it is necessary, and further, usually, a cheese like solid fermented food is made by performing the maturation.

The addition amount of salt is made so as to be 0.5-3.0 portions with respect to the solid portion (curd) which are 100 portions.

The maturation period is usually made in the range from one day to one year. The maturation time is changed depending upon the starter which is used, the fermentation conditions, and the taste to be pursued.

A cheese like solid fermented food thus manufactured is very pleasant and smooth to the palate as shown in an example described later, and since it is made from whole grain-mash of the bean as a raw material, its nutritive value is also very high. Furthermore, since rennet of animal origin is not used as the conventional ones do, a cheese like solid food made from vegetable material as a main raw material is capable of being manufactured.

In the above-described constitution, even if soybean milk is made as a raw material instead of a stabilized suspension, a cheese like solid fermented food can be obtained via the similar steps.

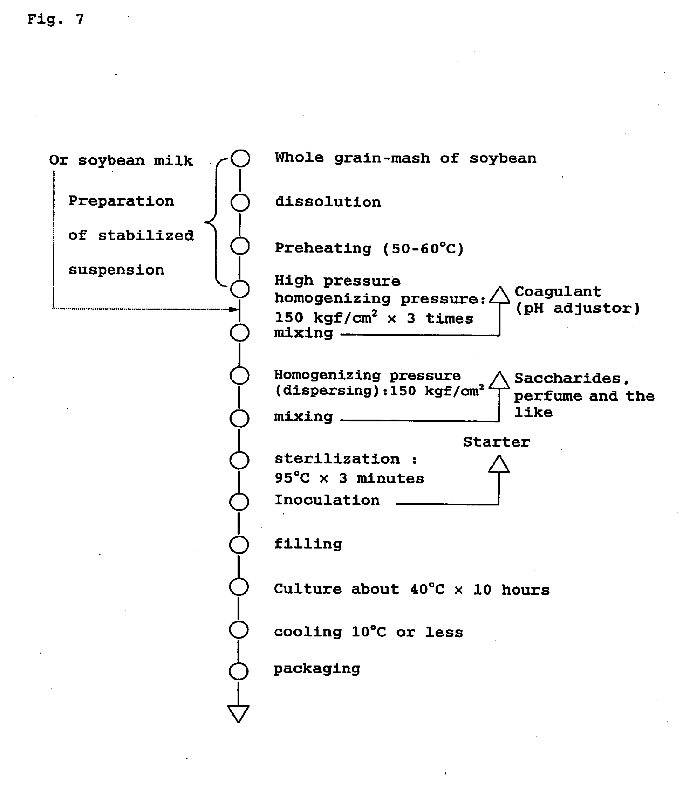

Next, a method for manufacturing a solid fermented food containing water in a gel form will be explained based on Fig.7.

The difference between the above-described cheese like solid fermented food and it is in that the content of whole grain-mash of soybean in the stabilized suspension is relatively small, and as for the steps, a lactic bacterium starter is filled into the food type as it is immediately after inoculation, cultured and further, appropriately cooled (refrigerated: at 10°C or less) and solidified into the product (solid fermented food containing water in a gel form).

Here, the culture conditions are made so as to be at 30-45°C for 4-80 hours.

Also in this method for manufacturing, but not pertaining to the invention, soybean milk is also capable of being used instead of a stabilized suspension.

Next, an example carried out for confirming the effect of the present invention will be explained below.

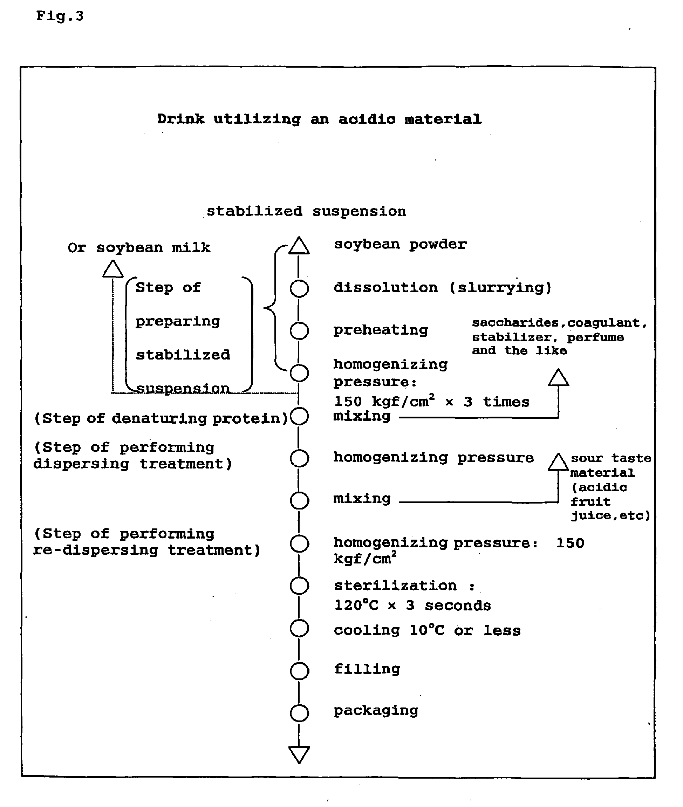

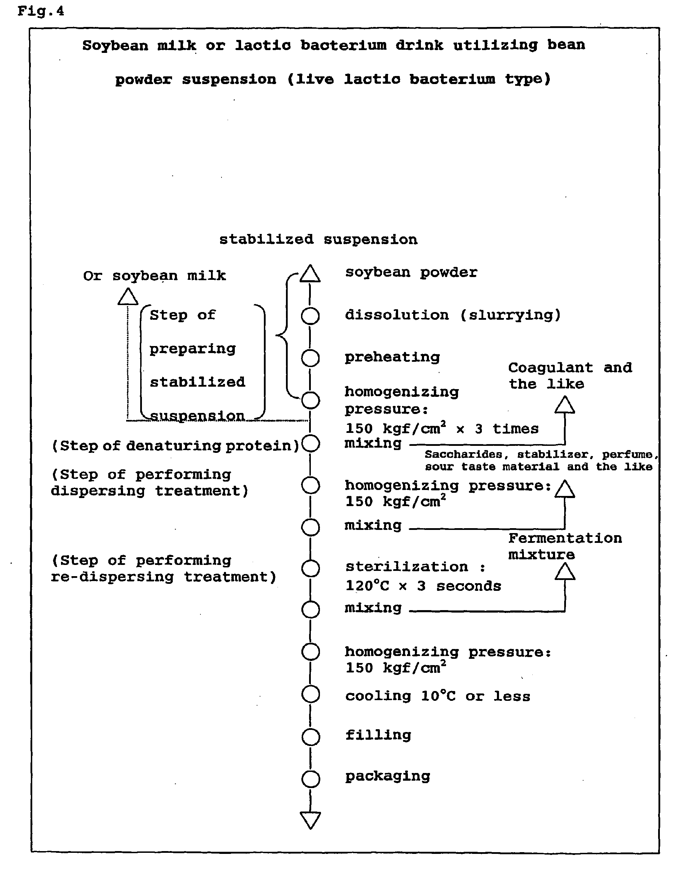

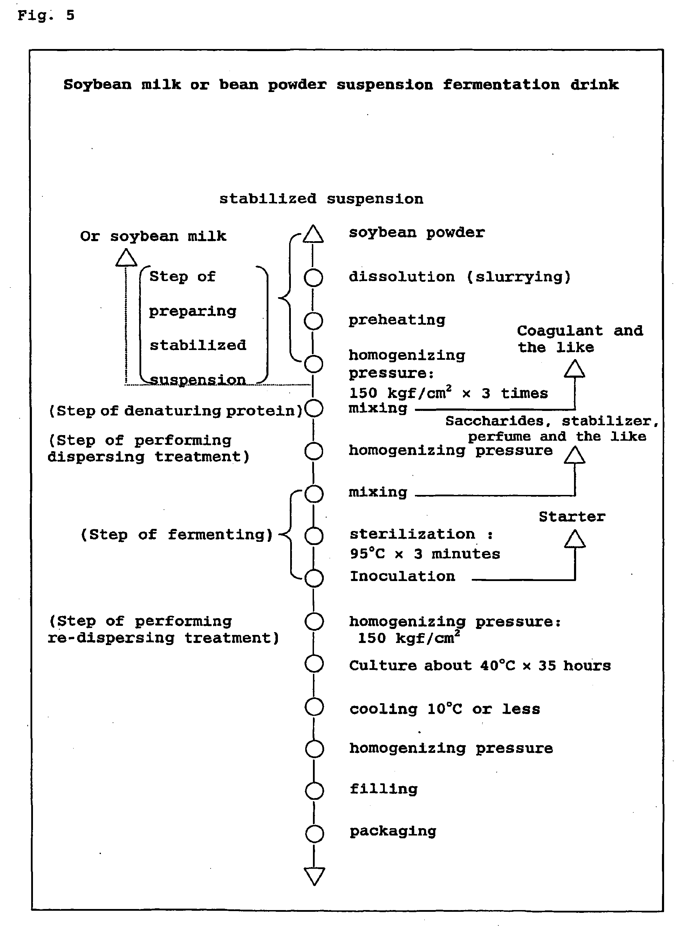

A raw material beans drink was prepared via the respective steps shown in Fig. 3 (Example 1), Fig. 4 (Example 2), Fig. 5 (Example 3). It should be noted that as whole grain-mash of a bean, the products commercially available in the market ("Gold" made by Toushoku, Co., Ltd., mainly 10-50 µm of grain diameter distribution) wasused. Moreover, forpreparationof the stabilized suspension dissolution tank made by Shikoku Kakoki, Co., Ltd., (40-60 rpm) was used, as a homogenizer, "high pressure homogenizer H120-AA1 type" made by Sanwa Machine, Co., Inc., (homogenizing pressure: 150 kgf/cm²) was used.

Fig. 3 is a flow chart showing a method for manufacturing a raw material beans drink using a sour taste material as an acidic material, and a raw material beans drink by blending the components indicated in Table 1 was obtained.

**<Table 1>**

| | | |
|---|---|---|
| Whole grain-mash of soybean | 4.00 | wt% |
| Magnesium chloride | 0.03 | |
| Fructose; glucose liquid sugar Bx75 | 15.00 | |
| Thickening polysaccharides | 0.50 | |
| Sour taste material or fruit juice | 0.30 | |
| Perfume | 0.07 | |

The content is made 100% by adding water.

Moreover, Fig.4 is a flow chart showing a method for manufacturing a lactic bacterium fermentation type drink in the case where a sour taste material was used as an acidic material, a raw material beans drink was obtained by blending the components indicated in Table 2.

**<Table 2>**

| | | |
|---|---|---|
| Whole grain-mash of soybean | 4.00 | wt% |
| Fructose, glucose liquid sugar Bx75 | 14.00 | |
| Fermentation mixture* | 3.00 | |
| Soybean polysaccharides | 0.50 | |
| Magnesium chloride | 0.03 | |
| Sour taste material (citric acid) | 0.30 | |
| Perfume | 0.07 | |

| | | |
|---|---|---|
| The content is made 100% by adding water. * S. thermophilus and L. helveticus culture matters | | |

Moreover, Fig.5 is also a flow chart showing a method for manufacturing a lactic bacterium fermentation type drink in the case where a sour taste material was used as an acidic material, a raw material beans drink was obtained by blending the components indicated in Table 3.

**<Table 3>**

| | | |
|---|---|---|
| Whole grain-mash of soybean | 4.00 | wt% |
| Fructose, glucose liquid sugar Bx75 | 14.00 | |
| Lactic bacteria starters* | 3.00 | |
| Magnesium chloride | 0.03 | |
| Perfume | 0.07 | |

| | | |
|---|---|---|
| The content is made 100% by adding water. * S. thermophilus and L. helveticus | | |

Then, we could have confirmed that in the respective raw material beans drinks, these are pleasant to the palate, and have an excellent slippery smooth feeling in the throat.

### Example 4: Manufacturing of cheese like solid fermented food

The primary suspension (slurry) was prepared by dispersing whole grain-mash of the bean commercially available in the market ("Gold" made by Toushoku, Co., Ltd., mainly grain diameter distributed in the range from 10 to 50µm) in water while stirring it (dissolution tank made by Shikoku Kakoki, Co., Ltd., at 40-60 rpm) so as to be approximately 12% concentration.

The stabilized suspension was prepared by performing the homogenization treatment of the relevant primary suspension three times using a high pressure type homogenizer ("High pressure homogenizer H120-AA1 type" made by Sanwa Machine, Co. , Inc.) under the homogenizing pressure of 150 kgf/cm² (14.7 MPa).

Then, the stabilized suspension was prepared so that the concentration of whole grain-mash of the soybean becomes the composition of Table 4, and a cheese like solid fermented food was manufactured via the steps of the respective conditions shown in Fig. 6.

The cheese like solid fermented food thus manufactured was pleasant and smooth to the palate, and provides an excellent taste.

**<Table 4>**

| | | wt% |
|---|---|---|
| Whole grain-mash of soybean | 8.00 | |
| Glucose | 3.00 | |
| Coagulant (potassium chloride) | 0.03 | |
| Lactic bacteria starters* | 1.00 | |
| Salt | suitable amount | |

| | | |
|---|---|---|
| The content is made 100% by adding water. * S. thermophilus and L. helveticus | | |

### Example 5: Method for manufacturing solid fermented food in gel

The stabilized suspension prepared similar to the above-described ones was prepared so that the concentration of whole grain-mash of soybean becomes a composition of Table 5 by adding water, and a solid fermented food in a gel was manufactured via the steps of the respective conditions shown in Fig.7.

The solid fermented food in a gel thus manufactured has provided a pleasant and smooth to the palate and an excellent taste.

**<Table 5>**

| | wt% |
|---|---|
| Whole grain-mash of soybean | 4.00 |
| Fructose, glucose liquid sugar Bx75 | 14.00 |
| Lactic bacteria starters* | 3.00 |
| Magnesium chloride | 0.03 |
| Perfume | 0.07 |

| | |
|---|---|
| The content is made 100% by adding water. * S. thermophilus and L. helveticus | |

## Claims

1. A method of manufacturing a drink made from beans as a raw material, wherein it comprises the steps of:
preparing a stabilized suspension by treating an aqueous slurry of whole grain-mash of beans once or a plurality of times using a homogenizer under a homogenizing pressure of 100 kgf/cm² (9.8 MPa) or more;
denaturing protein by adding a coagulant and/or a pH adjustor to said stabilized suspension; and
performing the dispersing treatment for making the relevant protein denaturation raw material dispersed by a physical dispersing means.

2. The method of manufacturing a drink made from beans as a raw material of claim 1, wherein it further comprises a step of fermentation for adding saccharides as well as a lactic bacterium starter if it is necessary and fermenting it as a step following the step of performing the dispersing treatment.

3. The method of manufacturing a drink made from beans as a raw material of claim 2, wherein it further comprises a step of performing a re-dispersing treatment for making it re-dispersed by a physical dispersing means.

4. The method of manufacturing a drink made from beans as a raw material of claim 1, wherein one or more than two species of coagulant(s) and/or pH adjustor(s) are selected from the group of magnesium chloride, calcium chloride and an acidic pH adjustor.

5. The method of manufacturing a drink made from beans as a raw material of claim 1, wherein a dispersing treatment in said step of performing dispersing /re-dispersing treatments is performed using a homogenizer in said step of preparing a stabilized suspension under a pressure of a homogenizing pressure or less in said step of preparing a suspension.

6. A method of manufacturing a solid fermented food made from beans as a raw material, wherein it comprises the steps of:
preparing a stabilized suspension by treating an aqueous slurry of whole grain-mash of beans once or a plurality of times sing a homogenizer under a homogenizing pressure of 100 kgf/cm² (9.8 MPa) or more;
denaturing protein by adding a coagulant and/or a pH adjustor to the relevant stabilized suspension;
performing the dispersing treatment for making the relevant protein denaturation raw material dispersed by a physical dispersing means; and
fermenting for fermenting/solidifying by adding a lactic bacterium starter following the relevant step of performing a dispersing treatment,
wherein said method manufactures it via a step of maturing it if it is necessary.

7. The method of manufacturing a beans raw material solid fermented food made from beans as a raw material of claim 6, wherein saccharides as well as a lactic bacterium starter are added if it is necessary.

8. The method of manufacturing a beans raw material solid fermented food made from beans as a raw material of claim 6, wherein one or more than two species of said coagulant (s) and/or pH adjustor(s) are selected from the group of potassium chloride, magnesium chloride, calcium chloride and an acidic pH adjustor.

## Patentansprüche

1. Verfahren zur Herstellung eines aus Bohnen als Rohstoff erzeugten Getränks, umfassend die Schritte:
Herstellen einer stabilisierten Suspension durch einmaliges oder mehrmaliges Behandeln einer wässrigen Aufschlämmung einer Pulpe aus ganzen Bohnenkernen mit einem Homogenisator bei einem Homogenisierungsdruck von 100 kgf/cm² (9,8 MPa) oder mehr;
Denaturieren des Proteins durch Hinzufügen eines Koagulans und/oder Mittels zur pH-Einstellung zur stabilisierten Suspension; und
Durchführen der Dispersionsbehandlung um den entsprechenden denaturierten Proteinrohstoff mittels einer physikalischen Dispergiervorrichtung zu dispergieren.

2. Verfahren zur Herstellung eines aus Bohnen als Rohstoff erzeugten Getränks gemäß Anspruch 1, des Weiteren umfassend Hinzufügen von Sacchariden sowie einem Milchsäurebakterium-Starter, falls erforderlich, und Fermentieren als dem Schritt des Durchführens der Dispersionsbehandlung folgender Schritt.

3. Verfahren zur Herstellung eines aus Bohnen als Rohstoff erzeugten Getränks gemäß Anspruch 2, des Weiteren umfassend einen Schritt des Durchführens einer Re-Dispersionsbehandlung zum Re-Dispergieren mittels einer physikalischen Dispergiervorrichtung.

4. Verfahren zur Herstellung eines aus Bohnen als Rohstoff erzeugten Getränks gemäß Anspruch 1, wobei eine oder mehr als zwei Arten von Koagulans (Koagulanzien) und/oder Mittel(n) zur pH-Einstellung ausgewählt werden aus Magnesiumchlorid, Calciumchlorid und einem sauren Mittel zur pH-Einstellung.

5. Verfahren zur Herstellung eines aus Bohnen als Rohstoff erzeugten Getränks gemäß Anspruch 1, wobei im Schritt des Erzeugens einer stabilisierten Suspension eine Dispersionsbehandlung im Schritt des Durchführens der Dispergier-/Re-Dispergier-Behandlungen mit einem Homogenisator bei einem Druck des Homogenisierungsdrucks oder weniger im Schritt des Erzeugens einer Suspension durchgeführt wird.

6. Verfahren zur Herstellung eines festen, fermentierten, aus Bohnen als Rohstoff erzeugten Nahrungsmittels, wobei folgende Schritte umfasst sind:
Herstellen einer stabilisierten Suspension durch einmaliges oder mehrmaliges Behandeln einer wässrigen Aufschlämmung einer Pulpe aus ganzen Bohnenkernen mit einem Homogenisator bei einem Homogenisierungsdruck von 100 kgf/cm² (9,8 MPa) oder mehr;
Denaturieren des Proteins durch Hinzufügen eines Koagulans und/oder Mittels zur pH-Einstellung zur stabilisierten Suspension;
Durchführen der Dispersionsbehandlung, um den entsprechenden denaturierten Proteinrohstoff mittels einer physikalischen Dispergiervorrichtung zu dispergieren; und
Fermentieren zum Fermentieren/Verfestigen durch Hinzufügen eines Milchsäurebakterium-Starters nach dem entsprechenden Schritt des Durchführens einer Dispersionsbehandlung,
wobei das Verfahren es, falls erforderlich, mittels eines Reifungsschritts herstellt.

7. Verfahren zur Herstellung eines festen, fermentierten Nahrungsmittels aus Bohnenrohstoff, erzeugt aus Bohnen als Rohstoff gemäß Anspruch 6, wobei, falls erforderlich, Saccharide sowie Milchsäurebakterium-Starter zugegeben werden.

8. Verfahren zur Herstellung eines festen, fermentierten Nahrungsmittels aus Bohnenrohstoff, erzeugt aus Bohnen als Rohstoff gemäß Anspruch 6, wobei eine oder mehr als zwei Arten des/der Koagulans (Koagulanzien) und/oder Mittel(s) zur pH-Einstellung ausgewählt sind aus Kaliumchlorid, Magnesiumchlorid, Calciumchlorid und einem sauren Mittel zur pH-Einstellung.

## Revendications

1. Procédé de fabrication d'une boisson fabriquée à partir de fèves en tant que matière première, qui comprend les étapes consistant à :
préparer une suspension stabilisée en traitant une suspension épaisse aqueuse de purée de grains entiers de fèves une fois ou une pluralité de fois en utilisant un homogénéisateur sous une pression d'homogénéisation de 100 kgf/cm² (9,8 MPa) ou plus;
dénaturer la protéine en ajoutant un coagulant et/ou un agent d'ajustement de pH à ladite suspension stabilisée ; et
effectuer le traitement de dispersion pour fabriquer la matière première pour dénaturation de la protéine appropriée dispersée par un moyen de dispersion physique.

2. Procédé de fabrication d'une boisson fabriquée à partir de fèves en tant que matière première selon la revendication 1, qui comprend en outre
ajouter les saccharides de même qu'un ferment de bactérie lactique si celui-ci est nécessaire et sa fermentation comme étape suivant l'étape consistant à effectuer le traitement de dispersion.

3. Procédé de fabrication d'une boisson fabriquée à partir de fèves en tant que matière première selon la revendication 2, qui comprend en outre une étape consistant à effectuer un traitement de redispersion pour la redisperser par un moyen de dispersion physique.

4. Procédé de fabrication d'une boisson fabriquée à partir de fèves en tant que matière première selon la revendication 1, dans lequel une ou plus de deux espèces de coagulants et/ou d'ajusteurs de pH sont choisies dans le groupe constitué par le chlorure de magnésium, le chlorure de calcium et un agent d'ajustement de pH acide.

5. Procédé de fabrication d'une boisson fabriquée à partir de fèves en tant que matière première selon la revendication 1, dans lequel un traitement de dispersion dans ladite étape consistant à effectuer les traitements de dispersion/redispersion est effectué en utilisant un homogénéisateur dans ladite étape de préparation d'une suspension stabilisée sous une pression d'une pression d'homogénéisation ou inférieure dans ladite étape de préparation d'une suspension.

6. Procédé de fabrication d'un aliment fermenté solide fabriqué à partir de fèves en tant que matière première, qui comprend les étapes consistant à :
préparer une suspension stabilisée en traitant une suspension épaisse aqueuse de purée de grains entiers de fèves une fois ou une pluralité de fois en utilisant un homogénéiser sous une pression d'homogénéisation de 100 kgf/cm² (9,8 MPa) ou plus;
dénaturer la protéine en ajoutant un coagulant et/ou un agent d'ajustement de pH à la suspension stabilisée appropriée ;
effectuer le traitement de dispersion pour fabriquer la matière première pour dénaturation de protéine appropriée dispersée par un moyen de dispersion physique ; et
fermenter pour la fermentation/solidification en ajoutant un ferment de bactérie lactique suivant l'étape appropriée consistant à effectuer un traitement de dispersion,
dans lequel ledit procédé le fabrique via une étape de macération si celle-ci est nécessaire.

7. Procédé de fabrication d'un aliment fermenté solide ayant comme matière première des fèves fabriqué à partir de fèves en tant que matière première selon la revendication 6, dans lequel des saccharides de même qu'un ferment de bactérie lactique sont ajoutés si cela est nécessaire.

8. Procédé de fabrication d'un aliment fermenté solide ayant comme matière première des fèves, fabriqué à partir de fèves en tant que matière première selon la revendication 6, dans lequel une ou plus de deux espèces dudit ou desdits coagulants et/ou dudit ou desdits ajusteurs de pH sont choisies dans le groupe constitué par le chlorure de potassium, le chlorure de magnésium, le chlorure de calcium et un agent d'ajustement de pH acide.
